# EUROPEAN PATENT SPECIFICATION

(11) **EP 4 020 109 B1**
(45) Date of publication and mention of the grant of the patent: **11.09.2024**
(21) Application number: 20216980.1
(22) Date of filing: 23.12.2020
(51) Int. Cl.: G05B 23/02

(54) **METHOD FOR VERIFYING THE PLAUSIBILITY OF SENSOR INFORMATION IN A PLANT PROCESS**
VERFAHREN ZUR PLAUSIBILITÄTSPRÜFUNG VON SENSORINFORMATIONEN IN EINEM ANLAGENPROZESS
PROCÉDÉ POUR VÉRIFIER LA PLAUSIBILITÉ DES INFORMATIONS D'UN CAPTEUR DANS UN PROCESSUS D'USINE

(43) Date of publication of application: 29.06.2022
(73) Proprietor: Hach Lange GmbH, 14163 Berlin (DE)
(72) Inventor: Dörken, Rainer, 41189 Mönchengladbach (DE); Pape, Bert, 40878 Ratingen (DE); Simon, Jochen, 67098 Bad Dürkheim (DE); Warnemünde, Sabine, 41751 Viersen (DE); E Wood, Steven, 80537 Colorado (US); Thiel, Thomas, 40468 Düsseldorf (DE); Haeck, Michael, 51429 Bergisch Gladbach (DE); Rajasekharan, Vishnu, Fort Collins, CO 80528 (US); Salzer, Corey, Fort Collins, CO 80525 (US); Kroll, Dan, Fort Collins, CO 80528 (US); Graebner, Sean, Timnath, CO 80547 (US)
(74) Representative: Müller-Boré & Partner Patentanwälte PartG mbB

(56) References cited:
- US-A1- 2016 124 399
- US-A1- 2019 129 404

## Description

The present invention relates to a method for verifying the plausibility of sensor information sensed by a sensor device associated with a plant process, and a control unit for controlling a plant process.

It is known to control a plant process, e.g., a water treatment process and/or a wastewater treatment process running in a water treatment plant, based on sensor information provided by one or more sensor devices. The sensor information may be related to parameters of the plant process and/or stages of the plant process, e.g., a nitrification stage and/or an aeration stage. In particular, based on the sensor information, a control unit for controlling the plant process may determine, e.g., calculate, specific process parameters and/or control activities for controlling the plant process. That is, the sensor device and/or sensor information may be part of a feedback loop and/or feedforward strategy to control the plant process and the sensor information is provided preferably continuously to the control unit but may also be provided discontinuously e.g. based on laboratory results. For example, a sensor device may provide sensor information regarding a phosphorus concentration in the (waste) water and the control unit may determine, based on said sensor information, the dosage of chemicals (here precipitant) to be applied in the plant process to meet a specific phosphorus concentration. Further examples of sensor devices relate to sensor devices providing sensor information regarding ammonia, nitrate, oxygen, residual chlorine, concentration and pH and conductivity

To ensure that the plant process operates optimal, the uptime, reliability and quality of the sensor information is crucial. That is, a sensor information deviating from the actual parameter of the plant process to which it refers to might cause the control unit to control the plant process inadequate. This can lead to a situation that certain quality requirements of the plant process cannot be met and/or the plant process is not operated efficiently.

Such faulty sensor information and/or sensor reading may have two major causes. The first cause is that the sensor device itself, e.g., a broken sensing element like a pH membrane or huminity in a sensor device, or the communication chain for communicating the sensor information to the control unit is faulty. Such faults can be identified and reported by the sensor device, e.g., by an internal self-test of the sensor device. Accordingly, corrective measures can be taken, e.g., replacing the sensor device.

The second cause is that the sensor reading of the sensed parameter slowly drifts from the actual value of said parameter, although the sensor device is indicating to be fully functional. This phenomenon is called "drifting sensor reading" and as an example can be caused by pollution or depletion of the sensing device, specifically of the sensing element of the sensing device. In order to avoid drifting sensor readings, sensor devices are usually compared with a laboratory result of a sample taken next to the sensor device's measurement point. If a deviation between the laborator result and the sensor information/sensor reading is identified, the sensor device is calibrated. In general, such a procedure is done according to a given (time) interval, e.g., weekly, biweekly or every X operating hours. However, interval-based comparison/calibration of sensor devices is cumbersome and time/resource consuming. Moreover, drifting sensor readings occurring between successive sensor device comparison/calibrations cannot be identified and might cause inappropriate control actions of the control system relying on the sensor information

Further, US 2019/129404 A1 relates to a system for data collection and monitoring in an industrial environment. A data acquisition circuit may interpret a plurality of detection values, each of the plurality of detection values corresponding to at least one of a plurality of input sensors. A data storage circuit may store sensor specifications, anticipated state information and detected values for use by a signal evaluation to determine a sensor overload status, a sensor fault status or a sensor validity value of at least one sensor in response to the plurality of detection values and at least one of an anticipated state information or a sensor specification. A response circuit may perform an operation in response to one of a sensor overload status, a sensor health status, or a sensor validity status.

Further, US 2016/124399 A1 relates to systems for mode switching in an appliance, and related analysis and reporting. Associated methods can include determining, by circuitry of an appliance, that an operation of the appliance is abnormal. The determination can include sensing the abnormality and identifying that the operation of the appliance is an abnormal operation according to the sensing of the abnormality. The methods also include switching, by the circuitry, the operation of the appliance to a safe mode. The safe mode can include reducing power used with the operation (such as to stop or reduce speed of rotation of a fan in the appliance). The method also includes communicating, by the circuitry, information regarding the abnormality and/or that the abnormality was resolved, to an electronic device and/or a server. The electronic device can display the information on a display device. The server can generate statistics according to the information.

Accordingly, it is an objective of the invention to improve the detection of faulty sensor readings/information and/or sensor devices, in particular drifting sensor readings, to ensure a plant process can be operated efficiently while compliance can be ensured.

This objective is achieved by the subject-matter of the independent claims. Preferred embodiments are defined in the dependent claims.

A first aspect relates to a method for verifying the plausibility of sensor information sensed by a sensor device associated with a plant process, in particular a water treatment process and/or a wastewater treatment process, wherein the sensor information relates to the plant process, the method comprising:
receiving, by a control unit, the sensor information;
performing, by the control unit, a verification model, the verification model determining an expected sensor information of the sensor device based on at least one other information related to the plant process and having a relationship to the sensor information;
comparing the expected sensor information with the received sensor information; and
upon determining that the sensor information deviates from the expected sensor information, outputting, by the control unit, a verification signal. A method for verifying the plausibility of sensor information according to the invention is defined by the subject-matter of claim 1.

Advantageously, the present disclosure uses other information related to the plant process for determining that the sensor information related to the plant process is accurate and reliable or not. Hence, a sensor misreading of the sensor device can be detected although the sensor device does not report any errors, e.g., from a built-in self-test, and appears to operate normal. Moreover, it is possible to identify a sensor misreading independent of a comparison or calibration activity of the sensor device according to a given comparison or calibration interval. That is, the present disclosure provides the possibility for an event-based comparison or calibration of the sensor device. Specifically, if it is determined that the received sensor information differs from the expected sensor information, the output of the verification signal may initiate a comparison or calibration activity of the sensor device.

Moreover, because the verification model determines the expected sensor information based on at least one other information related to the plant process, the expected sensor information is determined in the context of the (running) plant process. That is, the at least one other information and the sensor information may be related to each other and the plant process and the at least one other information may allow to conclude the expected sensor information. Moreover, the at least one other information may be information useable for controlling and monitoring the plant process and/or stages of the plant process.

The sensor device may provide as sensor information a sensor reading of a parameter related to the plant process. With other words, the sensor information may be based on a sensor reading of a parameter related to the plant process. For example, the sensor reading/information may represent an oxygen concentration, nitrate concentration, phosphorus concentration and or residual chlorine related to the plant process. Further examples of sensor information and corresponding sensor devices relate to water flow rates, air flow rates, chemical flow rates, pressure, valve positions, and an operation frequency of a blower.

Moreover, the control unit may control the plant process based on the sensor information. However, this does not necessarily mean that the control unit controls the plant process solely on the sensor information.

Furthermore, the control unit may use the sensor information as a feedback and/or feedforward parameter in the plant process control. That is, the control unit may preferably continuously receive and/or evaluate the sensor information and control the plant process in response to the sensor information and/or changes in the sensor information. For example, a sensor device may provide sensor information regarding the phosphorus concentration of the (waste) water and the control unit may determine, based on said sensor information, the dosage of chemicals, e.g., a precipitant, to be applied in the plant process to meet a specific phosphorus concentration. Continuing the example of the phosphorus concentration, the at least one other information may relate to the amount of dosage of chemicals which has been applied in the plant process. Based on this information, the verification model may determine how the phosphorus concentration, measured preferably continuously by the sensor device, should behave, i.e., how the phosphorus concentration should develop over time. In case of discrepancies to the actual measured sensor reading/sensor information by the sensor device, the control unit may determine that the sensor information is not plausible, and the verification signal is output.

Preferably, the at least one other information is not originated from the sensor device. For the purpose of this disclosure, the term "not originated from" shall be construed to mean instantaneous sensor readings and/or sensor information communicated by the sensor device. Accordingly, a data model which is based on collected sensor information of the sensor device, e.g., based on sensor information collected over a period of time, shall not fall under the term "not originated from". For the case that a sensor device supports providing sensor information/readings of more than one parameter, e.g., a ammonia and a nitrate concentration, each single sensor information of said sensor device is considered to represent a sensor information of a dedicated sensor device. That is, for the present disclosure it is assumed that the sensor information which does not correspond to the received sensor information, i.e., which relates to a different parameter of the plant process, might be useable for the at least one other information. Further, for the present disclosure it is assumed that information related to the internal functioning of the sensor device, e.g., a built-in or internal self-test of the sensor device, does not represent the at least one other information because it is not related to the plant process. Rather, such information relates to the internal operation of the sensor device.

Preferably, the at least one other information is at least one of a second sensor information of a second sensor device associated with the plant process, a process parameter related to the plant process, a plant process constraint and a control activity related to the plant process. Advantageously, it is thus possible to verify the plausibility of the sensor information based on plant process related information.

For example, the second sensor device may provide as second sensor information a sensor reading related to a dosage of a chemical applied in the plant process. Based on said dosage information, the verification model may determine an expected sensor information which the sensor device (first sensor device) shall provide/communicate, because applying the dosage of the chemical in the plant process may have a deterministic impact to the parameter reading by the first sensor device.

Moreover, a process parameter as the at least one other information may provide for a time-based relationship between the at least one other information and the sensor information. For example, the process parameter may be a consumption information of past periods, e.g., consumed energy for aeration and/or consumed chemicals at a certain time of a day. Further, if it is determined that the consumption determined from the sensor information deviates from the consumption information of past periods, the verification signal is output. The verification signal may further indicate that the sensor device is likely to be faulty and/or that a sensor device sensing a process parameter having an effect on the process parameter associated with the at least one other information, i.e., the consumption of energy for aeration or consumption of chemicals, is faulty. For example, if the current energy consumption for aeration deviates from an expected energy consumption, a sensor device sensing the oxygen and/or ammonium concentration which is used in a closed loop control might be faulty and thus, causing an inappropriate aeration control.

Moreover, a plant process constraint as the at least one other information may provide for defining a relationship between a limitation of the plant process and the sensor information. A plant process constraint may be a physical and/or a chemical constraint given by the plant process, e.g., by the physical layout of the plant running the plant process. For example, a sensor information related to a sensor reading of a flow rate or a change of a flow rate in the hydraulic system of the plant may be compared to an expected flow rate or change of flow rate based on constraints of the plant process. As an example for such constraints, one may consider the volume of a reactor, a flow rate to the reactor and an assumed maximum inflow concentration which result in an expected maximum change in sensor reading of the sensor device. Accordingly, deviations between the expected flow rate and the measured flow rate (current sensor information) may cause the verification signal to be output. The verification signal may indicate that the sensor device communicating the sensor information is likely to be faulty.

Moreover, a control activity related to the plant process as the at least one other information may provide information for defining a relationship of control activities with respect to the sensor information. A control activity may relate to modifying a control parameter influencing the plant process or a parameter of the plant process. For example, increasing the aeration energy in the plant process should result in a decrease of an ammonium (NH4-N) sensor reading of a sensor device. Accordingly, if the current sensor reading does not decrease, the verification signal may be output. The verification signal may further indicate that the sensor device communicating the sensor information is likely to be faulty.

According to the invention, the verification model includes at least one rule for determining the expected sensor information based on the at least one other information. Accordingly, the at least one rule defines a relationship or dependency between the at least one other information and the sensor information. In case the expected sensor information deviates from the sensor information, the control unit may assume that the at least one rule is violated which may cause the verification signal to be output. Moreover, the at least one rule may be deterministic. That is, the same input to the rule provides the same output, i.e., the same expected sensor information. Further, rules may be associated with each other allowing a fine-grained determination of the expected sensor information. Accordingly, the verification signal may be output if more than one or even all associated rules are violated.

Moreover, the at least one rule may further define verification information to be issued with the verification signal. The verification information may indicate the sensor device which is probably faulty. This is particular useful for a case where the violation of a rule indicates that a sensor device other than the sensor device providing the sensor information with which the expected sensor information is compared is faulty.

Furthermore, the at least one rule may be defined by a user. For example, the control unit may provide a user interface allowing to define the at least one rule.

Preferably, the at least one rule is determined based on historical data related to the plant process or during a learning period. For example, the at least one rule may be determined by an artificial intelligence module being trained with the historical data.

Preferably, the method may comprise switching the control unit in a safe control mode for controlling the plant process, in response to the verification signal. Accordingly, it is possible to provide safe control of the plant process in case a sensor device is not operating properly. Moreover, one or more control mode activities for the safe control mode may be defined in the control unit and/or are provided with the verification signal. For the latter, the rules of the at least one rules may be associated with the one or more control mode activities and in case a rule is violated the correspond one or more control mode activities are output with the verification signal. Further, the one or more control mode activities may be applied to the plant process, preferably by the control unit. For example, the one or more control mode activities may cause the plant process to be performed on a reduced level.

Preferably, the method may comprise initiating a maintenance procedure, in particular a comparison/calibration procedure, for the sensor device, in response to the verification signal. The comparison/calibration procedure may be automated or may be performed manually, e.g., by an operator. In the latter case, the output of the verification signal may cause a notification to be send to the operator that a sensor device which is probably faulty or has probably faulty sensor readings requires calibration. The notification may be communicated by the control unit to the operator, e.g., to a computing device of the operator.

Moreover, after completing the automatic and/or manual comparison/calibration, the control unit may switch from the safe control mode back to a normal control mode if the process reading is confirmed by the Laboratory measurement. Completion of the calibration may be notified to the control unit electronically.

Preferably, the expected sensor information specifies a range of values of a parameter value and in case the sensor information is outside of said range, the verification signal is output. Moreover, the expected sensor information may specify a behavior of the sensor information/sensor device. For example, the behavior may be an increasing or decreasing sensor reading over time. Further, the variance of sensor readings may be considered as sensor information and/or the at least one other information.

A further aspect relates to a control unit for controlling a plant process, in particular a water treatment process and/or a wastewater treatment process, the control unit being communicatively coupled to a sensor device associated with the plant process and sensing sensor information related to the plant process, the control unit being configured to:
receive the sensor information;
perform a verification model, the verification model for determining an expected sensor information of the sensor device based on at least one other information related to the plant process and having a relationship to the sensor information;
compare the expected sensor information with the received sensor information; and
output a verification signal upon determining that the sensor information deviates from the expected sensor information.

The control unit may be implemented in hardware or may be provided as software for execution on a computing device. A control unit according to the invention is defined by the subject-matter of claim 7.

Further, the control unit may have features according to the previous aspect.

A further aspect may relate to a computer program comprising instructions which, when the program is executed by a control unit for controlling a plant process, in particular a water treatment process and/or a wastewater treatment process, the control unit being communicatively coupled to a sensor device associated with the plant process and sensing sensor information related to the plant process, cause the control unit to carry out a method according to the previous aspect. A computer program according to the invention is defined by the subject-matter of claim 12.

These and other objects, features and advantages of the present invention will become more apparent upon reading of the following detailed description of preferred embodiments and accompanying figures. It should be understood that even though embodiments are separately described, single features thereof may be combined to additional embodiments.
- Figure 1: depicts a method for verifying the plausibility of sensor information in a plant process, and
- Figure 2: Depicts a process for defining at least one rule used by a verification model.

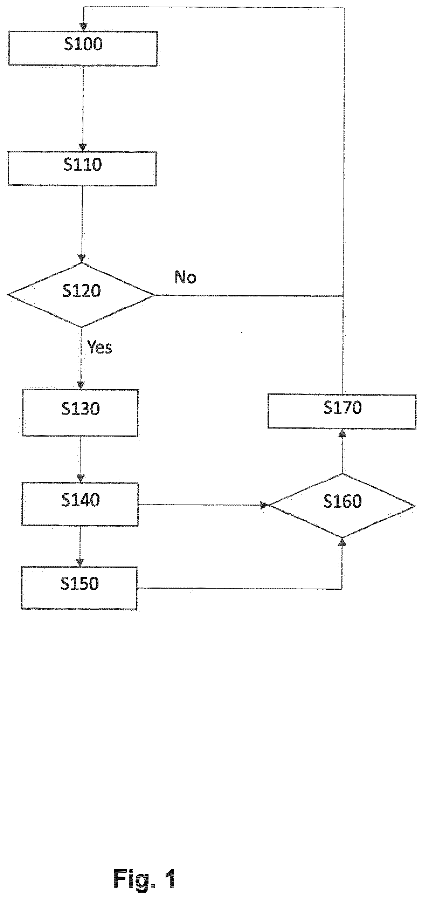

**Figure 1** schematically depicts a method for verifying the plausibility of sensor information in a plant process, e.g., a (waste) water treatment process. Some of the depicted method steps may be optionally and are depicted to provide a better understanding of the context the present disclosure. The method is depicted as a closed loop because it is continuously performed during execution of the plant process.

The plant process may be controlled based on data/information, in particular sensor information/readings, related to the plant process. The sensor information may be based on the sensor reading. For example, one or more sensor devices may provide sensor information related to the plant process to a control unit, wherein the control unit performs one or more control activities based on the sensor information. The sensor information may represent a value of a process parameter of the plant process. Further, the control unit may additionally consider the process stage of the plant process for performing said control activities.

A sensor device may be a process analyzer and/or a process probe which preferable continuously measures/reads a parameter related to the plant process, e.g., an oxygen concentration, a nitrate concentration etc. The sensor device may also be a non-analytic sensor, e.g., a water flow rate sensor, an air flow rate sensor, a pressure sensor. Both, the process analyzers, and non-analytic sensors may provide corresponding sensor information which may be used by the control unit to control the plant process.

In step S100 depicted in Figure 1, sensor information of one or more sensor devices may be received. Optionally, the sensor information may be stored to provide for historical data. Further, the sensor information is received by the control unit.

Moreover, the control unit is configured to perform a verification model, wherein the verification allows determining an expected sensor information of a sensor device of the one or more sensor devices based on at least one other information related to the plant process and having a relationship to the sensor information of said sensor device. That is, the expected sensor information is determined from the context of the plant process in which the sensor device operates.

In step S110, the control unit performs the verification model to determine the expected sensor information.

Further, in step S120, the determined expected sensor information is compared to the actual received sensor information of the sensor device which is to be verified. In case the actual sensor information matches the expected sensor information, the plant process is continued as it is. That is no exceptional control activities are performed.

Upon determining that the actual sensor information deviates from the expected sensor information, a verification signal is output by the control unit in step S130. Based on the output of the verification signal in step S130, the control unit may switch into a fallback operation mode for controlling the plant process (step S140 in Figure 1). The fallback operation mode may provide for safe operation of the plant process which might be based on a control strategy not relaying on the faulty sensor device. Furthermore, the verification signal may include information regarding specific fallback control activities to be performed by the control unit and/or the plant on which the plant process is running.

Furthermore, in step S150, the control unit may initiate a maintenance activity for a sensor device, e.g., a comparison / calibration activity. For example, the control unit may automatically activate a workflow procedure comparison/calibration of the sensor device and/or may electronically communicate to an operator that comparison/calibration of the sensor device is required. For this purpose, the control unit, the sensor device, and a calibration facility may be communicatively coupled with each other, e.g., through a cloud application. Furthermore, the verification signal may indicate the sensor device(s) for which the maintenance activity shall be performed.

In a first step of the comparison/calibration activity, the sensor information/sensor reading may be compared with a laboratory reading of a sample preferably taken at the location of the sensor device. In a second step, it is determined whether the sensor reading matches the laboratory reading. In case, both readings do not match, the sensor device is calibrated and/or repaired and/or exchanged and it is indicated to the control unit that the maintenance activity is completed. In case both readings match, it is also indicated that the maintenance activity is completed.

After completing the maintenance activity of the sensor device(s), the control unit may be switched back to a normal operation mode for controlling the plant process in step S170, provided that the control unit and/or the plant process was operated in the fallback operation mode (step S160).

In the following, examples of the at least one other information based on which the verification is performed are discussed in more detail.

Preferably, the at least one other information is at least one of a second sensor information of a second sensor device associated with the plant process, a process parameter related to the plant process, a plant process constraint and a control activity related to the plant process.

For example, the second sensor device may provide as second sensor information a sensor reading related to a dosage of a chemical applied in the plant process. Based on said dosage information, the verification model may determine an expected sensor information which the sensor device (first sensor device) shall provide/communicate, because applying the dosage of the chemical in the plant process may have a deterministic impact to the parameter reading by the first sensor device. Further, the dosage information may relate to time of day and the stage of the plant process. In another example, sensor information of similar sensor devices of parallel process/treatment lanes are compared. In a further example, a conductivity sensor reading may be used to verify a sensor information/sensor reading from an NH4-N sensor.

Moreover, a process parameter as the at least one other information may provide for a time-based relationship between the at least one other information and the sensor information. Specifically, historical data at a given time of the day may be the at least one other information. For example, the process parameter may be a consumption information of past periods, e.g., consumed energy for aeration and/or consumed chemicals. Further, if it is determined that the consumption determined from the sensor information deviates from the typical consumption information of past periods, e.g., example at the same time of the day, the verification signal is output. The verification signal may further indicate that the sensor device is likely to be faulty and/or that a sensor device sensing a process parameter having an effect on this process parameter, i.e., the consumption of energy for aeration or consumption of chemicals, is faulty. For example, if the current energy consumption for aeration deviates from an expected energy consumption, a sensor device sensing the oxygen and/or ammonium concentration might be faulty and thus, causing an inappropriate aeration control.

As a further example, the process parameter may be historical data related to a consumption of a chemical, e.g., a precipitant, at the same time of the sensor information and having similar flow rates.

Moreover, a plant process constraint as the at least one other information may provide for defining a relationship between a limitation the plant process and the sensor information. A plant process constraint may be a physical and/or a chemical constraint given by the plant process, e.g., by the physical layout of the plant running the plant process. For example, a sensor information related to a sensor reading of a flow rate or a change of a flow rate in the hydraulic system of the plant may be compared to an expected flow rate or change of flow rate based on the physical layout of the plant.

Accordingly, deviations between the expected flow rate and the measured flow rate (current sensor information) may cause the verification signal to be output. The verification signal may indicate that the sensor device communicating the sensor information is likely to be faulty.

Moreover, a control activity related to the plant process as the at least one other information may provide for defining a relationship of control activities with respect to the sensor information. A control activity may relate to modifying a control parameter influencing the plant process or a parameter of the plant process. For example, increasing the aeration energy in the plant process as a control activity should result in a decrease of an ammonium (NH4-N) sensor reading of a sensor device. Accordingly, if the current sensor reading does not decrease, the verification signal may be output. The verification signal may further indicate that the sensor device communicating the sensor information is likely to be faulty.

As a further example, the at least one other information may relate to the airflow demand in certain zones/stages of the plant process, e.g., a wastewater treatment process, which is compared to corresponding sensor information. Accordingly, a changing ratio between those air flow demands can be caused by a sensor device reading a NH4-N concentration. Specifically, a drifting NH4-N sensor reading towards higher reading will result in higher air demand in the corresponding lanes if the sensor device(s) is (are) implemented in a closed loop control structure. Moreover, the at least one other information and the sensor information may relate to a specific time of day

As a further example, on intermittent operated plants, when controlling the process to be in an aeration stage, it is expected that after a certain aeration time a sensor device reading the NH4-N parameter communicates 0mg/L (expected sensor information). If the actual sensor information deviates from this sensor information, the verification signal is output to initiate a maintenance activity for the sensor device.

According to the invention, the verification model includes at least one rule for determining the expected sensor information based on the at least one other information. Accordingly, the at least one rule defines a relationship or dependency between the at least one other information and the sensor information. In case the expected sensor information deviates from the sensor information, the control unit may assume that the at least one rule is violated which may cause the verification signal to be output. Moreover, the at least one rule may be deterministic. That is, the same input to the rule provides the same output, i.e., the same expected sensor information. Further, rules may be associated with each other allowing a fine-grained determination of the expected sensor information. Accordingly, the verification signal may be output if all associated rules are violated.

Moreover, the at least one rule may further define verification information to be issued with the verification signal. The verification information may indicate the sensor device which is probably faulty. This is particular useful for a case where the violation of a rule indicates that a sensor device other than the sensor device providing the sensor information with which the expected sensor information is compared is faulty.

Furthermore, the at least one rule may be defined by a user. For example, the control unit may provide a user interface allowing to define the at least one rule.

Preferably, the at least one rule is determined based on historical data (see step S100) related to the plant process or during a learning period. For example, the at least one rule may by determined by an artificial intelligence module being trained with the historical data.

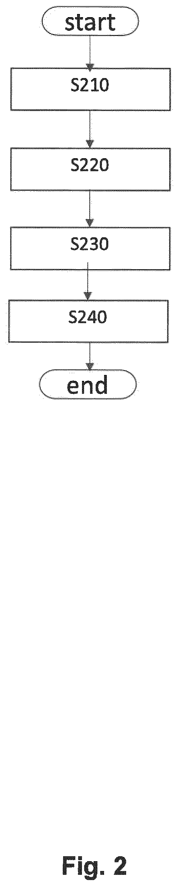

Referring to Figure 2, a process for defining the at least one rule used by the verification model is described in more detail. In step S210, one or more deterministic rules may be defined. A deterministic rule may be based on a relationship between a sensor information and the at least one another information. The deterministic rule may be defined by a user and stored in the control unit.

Alternative or additionally, one or more empirical rules may be defined. Empirical rules may be defined during a learning period and/or are based on historical date. For example, historical data stored in step S100 or other previously stored historical data.

In step S220, sensor devices and/or signals are defined for monitoring during a subsequent empirical relationship evaluation. In step S230, the defined sensor devices and/or signals are checked for correlations based on the evaluation which for example may be based on historical data. In case a correlation between sensor devices and/or signals has been found, a corresponding empirical rule is defined in step S240, wherein the rule defines a relationship between sensor devices and/or signals related to the plant process. The process results in at least one defined rule. The at least one rule may be applied to the verification model.

## Claims

1. A method for verifying the plausibility of sensor information sensed by a sensor device associated with a plant process, in particular a water treatment process and/or a wastewater treatment process, wherein the sensor information relates to the plant process, the method comprising:
receiving (S100), by a control unit, the sensor information, the method **characterized by**:
performing (S110), by the control unit, a verification model, the verification model determining an expected sensor information which the sensor device shall provide, wherein the verification model determines the expected sensor information based on at least one other information related to the plant process and having a relationship to the sensor information, wherein the at least one other information is at least one of a process parameter related to the plant process, a plant process constraint and a control activity related to the plant process, and wherein the verification model includes at least one rule for determining the expected sensor information based on the at least one other information, the at least one rule defining a relationship or dependency between the at least one other information and the sensor information;
comparing (S120) the expected sensor information with the received sensor information; and
upon determining (S120) that the sensor information deviates from the expected sensor information, outputting (S130), by the control unit, a verification signal.

2. The method of claim 1, wherein the at least one other information is not originated from the sensor device.

3. The method of claim any one of claims 1 to 2, wherein the at least one rule is determined based on historical data related to the plant process.

4. The method of any one of the preceding claims, further comprising:
in response to the verification signal, switching the control unit in a safe control mode for controlling the plant process.

5. The method of any one of the preceding claims, further comprising:
in response to the verification signal, initiating a maintenance procedure, in particular a comparison/calibration procedure, for the sensor device.

6. The method of claim 4, further comprising:
in response to the verification signal, initiating a maintenance procedure, in particular a comparison/calibration procedure, for the sensor device; and
after completing the maintenance procedure, switching the control unit from the safe control mode back to a normal control mode.

7. A control unit for controlling a plant process, in particular a water treatment process and/or a wastewater treatment process, the control unit being communicatively coupled to a sensor device associated with the plant process and sensing sensor information related to the plant process, the control unit being configured to:
receive the sensor information; **characterized by** the control unit being configured to:
perform a verification model, the verification model for determining an expected sensor information which the sensor device shall provide, wherein the verification model determines the expected sensor information based on at least one other information related to the plant process and having a relationship to the sensor information, wherein the at least one other information is at least one of a process parameter related to the plant process, a plant process constraint and a control activity related to the plant process, and wherein the verification model includes at least one rule for determining the expected sensor information based on the at least one other information, the at least one rule defining a relationship or dependency between the at least one other information and the sensor information;
compare the expected sensor information with the received sensor information; and
output a verification signal upon determining that the sensor information deviates from the expected sensor information.

8. The control unit of claim 7, wherein the at least one other information is not originated from the sensor device.

9. The control unit of claim 7 or 8, wherein the at least one rule is determined from historical data related to the plant process.

10. The control unit of any one of claims 7 to 9, wherein the control unit is configured to switch in a safe control mode for controlling the plant process in response to the verification signal.

11. The control unit of claim 10, further configured to initiate a maintenance procedure, in particular a comparison/calibration procedure, for the sensor device, and to switch from the safe control mode to a normal control mode of the plant process, after receiving an indication that the maintenance procedure has been completed.

12. A computer program comprising instructions which, when the program is executed by a control unit for controlling a plant process, in particular a water treatment process and/or a wastewater treatment process, the control unit being communicatively coupled to a sensor device associated with the plant process and sensing sensor information related to the plant process, cause the control unit to carry out the method of any one of claims 1 to 6.

## Patentansprüche

1. Verfahren zum Überprüfen der Plausibilität von Sensorinformationen, die von einer Sensorvorrichtung erfasst worden sind, die mit einem Anlagenprozess verknüpft ist, insbesondere einem Wasseraufbereitungsprozess und/oder einem Abwasseraufbereitungsprozess, wobei sich die Sensorinformationen auf den Anlagenprozess beziehen, wobei das Verfahren umfasst:
Empfangen (S100), durch eine Steuereinheit, der Sensorinformationen,
wobei das Verfahren **gekennzeichnet ist durch**:
Ausführen (S110), **durch** die Steuereinheit, eines Verifizierungsmodells, wobei das Verifizierungsmodell erwartete Sensorinformationen bestimmt, die die Sensorvorrichtung bereitstellen soll, wobei das Verifizierungsmodell die erwarteten Sensorinformationen basierend auf mindestens einer anderen Information bestimmt, bezogen auf den Anlagenprozess und mit Bezug auf die Sensorinformationen, wobei die mindestens eine andere Information ein Prozessparameter in Bezug auf den Anlagenprozess, eine Anlagenprozessbeschränkung und/oder eine Steueraktivität in Bezug auf den Anlagenprozess ist, und wobei das Verifizierungsmodell mindestens eine Regel zum Bestimmen der erwarteten Sensorinformationen auf Grundlage der mindestens einen anderen Information umfasst, wobei die mindestens eine Regel eine Beziehung oder Abhängigkeit zwischen der mindestens einen anderen Information und den Sensorinformationen definiert;
Vergleichen (S120) der erwarteten Sensorinformationen mit den empfangenen Sensorinformationen; und
Ausgeben (S130) eines Überprüfungssignals **durch** die Steuereinheit, wenn bestimmt wird (S120), dass die Sensorinformationen von den erwarteten Sensorinformationen abweichen.

2. Verfahren nach Anspruch 1, wobei die mindestens eine weitere Information nicht von der Sensorvorrichtung stammt.

3. Verfahren nach einem der Ansprüche 1 bis 2, wobei die mindestens eine Regel bestimmt wird auf der Grundlage historischer Daten, die sich auf den Anlagenprozess beziehen.

4. Verfahren nach einem der vorhergehenden Ansprüche, ferner umfassend:
als Reaktion auf das Überprüfungssignal, Umschalten der Steuereinheit in einen sicheren Steuermodus zum Steuern des Anlagenprozesses.

5. Verfahren nach einem der vorhergehenden Ansprüche, ferner umfassend:
als Reaktion auf das Überprüfungssignal, Einleiten einer Wartungsprozedur, insbesondere einer Vergleichs-/Kalibrierungsprozedur, für die Sensorvorrichtung.

6. Verfahren nach Anspruch 4, ferner umfassend:
als Reaktion auf das Überprüfungssignal, Einleiten einer Wartungsprozedur, insbesondere einer Vergleichs-/Kalibrierungsprozedur, für die Sensorvorrichtung; und
nach Abschließen der Wartungsprozedur, Umschalten der Steuereinheit von dem sicheren Steuermodus zurück in den normalen Steuermodus.

7. Steuereinheit zum Steuern eines Anlageprozesses, insbesondere eines Wasseraufbereitungsprozesses und/oder eines Abwasseraufbereitungsprozesses, wobei die Steuereinheit kommunikativ mit einer Sensorvorrichtung verbunden ist, die mit dem Anlageprozess verbunden ist, und Sensorinformationen im Zusammenhang mit dem Anlageprozess erfasst, wobei die Steuereinheit konfiguriert ist zum:
Empfangen der Sensorinformationen; **dadurch gekennzeichnet, dass** die Steuereinheit konfiguriert ist zum:
Ausführen eines Verifizierungsmodells, wobei das Verifizierungsmodell zum Bestimmen von erwarteten Sensorinformationen vorgesehen ist, die die Sensorvorrichtung bereitstellen soll, wobei das Verifizierungsmodell die erwarteten Sensorinformationen basierend auf mindestens einer anderen Information bestimmt, bezogen auf den Anlagenprozess und mit Bezug auf die Sensorinformationen, wobei die mindestens eine andere Information ein Prozessparameter in Bezug auf den Anlagenprozess, eine Anlagenprozessbeschränkung und/oder eine Steueraktivität in Bezug auf den Anlagenprozess ist, und wobei das Verifizierungsmodell mindestens eine Regel zum Bestimmen der erwarteten Sensorinformationen auf Grundlage der mindestens einen anderen Information umfasst, wobei die mindestens eine Regel eine Beziehung oder Abhängigkeit zwischen der mindestens einen anderen Information und den Sensorinformationen definiert;
Vergleichen der erwarteten Sensorinformationen mit den empfangenen Sensorinformationen; und
Ausgeben eines Überprüfungssignals, wenn bestimmt wird, dass die Sensorinformationen von den erwarteten Sensorinformationen abweichen.

8. Steuereinheit nach Anspruch 7, wobei die mindestens eine weitere Information nicht von der Sensorvorrichtung stammt.

9. Steuereinheit nach Anspruch 7 oder 8, wobei die mindestens eine Regel bestimmt wird aus historischen Daten mit Bezug auf den Anlagenprozess.

10. Steuereinheit nach einem der Ansprüche 7 bis 9, wobei die Steuereinheit dazu konfiguriert ist, als Reaktion auf das Überprüfungssignal in einen sicheren Steuermodus umzuschalten, um den Anlagenprozess zu steuern.

11. Steuereinheit nach Anspruch 10, ferner konfiguriert zum Einleiten einer Wartungsprozedur, insbesondere einer Vegleichs-/Kalibrierungsprozedur für die Sensorvorrichtung und zum Umschalten aus dem sicheren Steuermodus in einen normalen Steuermodus des Anlagenprozesses nach dem Empfangen einer Angabe dazu, dass die Wartungsprozedur abgeschlossen worden ist.

12. Computerprogramm, umfassend Anweisungen, die, wenn das Programm durch eine Steuereinheit zum Steuern eines Anlageprozesses, insbesondere eines Wasseraufbereitungsprozesses und/oder eines Abwasseraufbereitungsprozesses, ausgeführt wird, wobei die Steuereinheit kommunikativ mit einer Sensorvorrichtung verbunden ist, die mit dem Anlageprozess verbunden ist, und Sensorinformationen im Zusammenhang mit dem Anlageprozess erfasst, die Steuereinheit veranlassen, das Verfahren nach einem der Ansprüche 1 bis 6 auszuführen.

## Revendications

1. Procédé de vérification de la plausibilité des informations de capteur détectées par un dispositif capteur associé à un processus d'usine, en particulier à un processus de traitement de l'eau et/ou à un processus de traitement des eaux usées, les informations de capteur étant liées au processus d'usine, le procédé comprenant :
la réception (S100), par une unité de commande, des informations de capteur,
le procédé étant **caractérisé par** :
la réalisation (S110), par l'unité de commande, d'un modèle de vérification, le modèle de vérification permettant de déterminer des informations de capteur attendues devant être fournies par le dispositif capteur, le modèle de vérification déterminant les informations de capteur attendues sur la base d'au moins une autre information liée au processus d'usine et ayant un rapport avec les informations de capteur, la ou les autres informations étant au moins une information parmi un paramètre de processus lié au processus d'usine, une restriction du processus d'usine et une activité de commande liée au processus d'usine, et le modèle de vérification comprenant au moins une règle permettant de déterminer les informations de capteur attendues sur la base de la ou des autres informations, la ou les règles définissant un rapport ou une dépendance entre la ou les autres informations et les informations de capteur ;
la comparaison (S120) des informations de capteur attendues avec les informations de capteur reçues ; et
lors de la détermination (S120) que les informations de capteur s'écartent des informations de capteur attendues, la sortie (S130), par l'unité de commande, d'un signal de vérification.

2. Le procédé de la revendication 1, dans lequel la ou les autres informations n'émanent pas du dispositif capteur.

3. Le procédé de l'une quelconque des revendications 1 à 2, dans lequel la ou les règles sont déterminées sur la base d'un historique de données liées au processus d'usine.

4. Le procédé de l'une quelconque des revendications précédentes, comprenant en outre :
en réponse au signal de vérification, la commutation de l'unité de commande à un mode de commande sans échec permettant de commander le processus d'usine.

5. Le procédé de l'une quelconque des revendications précédentes, comprenant en outre :
en réponse au signal de vérification, le déclenchement d'une procédure d'entretien, en particulier d'une procédure de comparaison/étalonnage, destinée au dispositif capteur.

6. Le procédé de la revendication 4, comprenant en outre :
en réponse au signal de vérification, le déclenchement d'une procédure d'entretien, en particulier d'une procédure de comparaison/étalonnage, destinée au dispositif capteur ; et
après achèvement de la procédure d'entretien, la commutation de l'unité de commande du mode de commande sans échec de retour à un mode de commande normal.

7. Unité de commande permettant de commander un processus d'usine, en particulier un processus de traitement de l'eau et/ou un processus de traitement des eaux usées, l'unité de commande étant couplée de manière à communiquer avec un dispositif capteur associé au processus d'usine et détectant des informations de capteur liées au processus d'usine, l'unité de commande étant conçue :
pour recevoir les informations de capteur ;
**caractérisée en ce que** l'unité de commande est conçue :
pour effectuer un modèle de vérification, le modèle de vérification permettant de déterminer des informations de capteur attendues devant être fournies par le dispositif capteur, le modèle de vérification déterminant les informations de capteur attendues sur la base d'au moins une autre information liée au processus d'usine et ayant un rapport avec les informations de capteur, la ou les autres informations étant au moins une information parmi un paramètre de processus lié au processus d'usine, une restriction du processus d'usine et une activité de commande liée au processus d'usine, et le modèle de vérification comprenant au moins une règle permettant de déterminer les informations de capteur attendues sur la base de la ou des autres informations, la ou les règles définissant un rapport ou une dépendance entre la ou les autres informations et les informations de capteur ;
pour comparer les informations de capteur attendues avec les informations de capteur reçues ; et
pour émettre un signal de vérification lors de la détermination que les informations de capteur s'écartent des informations de capteur attendues.

8. L'unité de commande de la revendication 7, dans laquelle la ou les autres informations n'émanent pas du dispositif capteur.

9. L'unité de commande des revendications 7 ou 8, dans laquelle la ou les règles sont déterminées à partir d'un historique de données liées au processus d'usine.

10. L'unité de commande de l'une quelconque des revendications 7 à 9, dans laquelle l'unité de commande est conçue pour commuter à un mode de commande sans échec, permettant de commander le processus d'usine, en réponse au signal de vérification.

11. L'unité de commande de la revendication 10, conçue en outre pour déclencher une procédure d'entretien, en particulier une procédure de comparaison/étalonnage, destinée au dispositif capteur, et pour commuter du mode de commande sans échec à un mode de commande normal du processus d'usine, après réception d'une indication que la procédure d'entretien a été achevée.

12. Programme d'ordinateur comprenant des instructions lesquelles, lorsque le programme est exécuté par une unité de commande permettant de commander un processus d'usine, en particulier un processus de traitement de l'eau et/ou un processus de traitement des eaux usées, l'unité de commande étant couplée de manière à communiquer avec un dispositif capteur associé au processus d'usine et détectant des informations de capteur liées au processus d'usine, amènent l'unité de commande à mettre en oeuvre le procédé de l'une quelconque des revendications 1 à 6.
